# EUROPEAN PATENT APPLICATION

(11) **EP 4 686 705 A1**
(43) Date of publication of application: **04.02.2026**
(21) Application number: 24382849.8
(22) Date of filing: 31.07.2024
(51) Int. Cl.: C02F 1/04

(54) **POLYETHER BLOCK AMIDE MEMBRANES AND PROCESS FOR RECOVERING AMMONIACAL NITROGEN USING THEM**

(71) Applicant: Floc Ammonia Solutions, S.L., 08530 La Garriga (ES)
(72) Inventor: MAS PUJADAS, Francesc, 08530 La Garriga (ES)
(74) Representative: ZBM Patents - Zea, Barlocci & Markvardsen

(57) **Abstract**

It relates to a process for recovering ammoniacal nitrogen, either NH₃/NHa⁺ (aq)_{'} from a liquid phase, or ammonia, NH₃ (g) from a gas phase, where: when the recovery is from a liquid phase, the process comprises permeating the nitrogen ammoniacal from a liquid phase at a working pH from 7 to 10 through a tubular membrane module to a trapping solution at a pH from 1 to 4, to yield a solution comprising ammonia salts; when the recovery is from a gas phase, the process comprises permeating ammonia gas through a tubular membrane module to a trapping solution at a pH from 1 to 4, to yield a solution with ammonia salts; the tubular membrane module comprises an arrangement of tubes, wherein the tubes are made of polyether block amide. It also relates to the tubular membrane and a system for recovering ammoniacal nitrogen comprising it.

## Description

### Technical Field

The present invention relates to the technical field of ammoniacal nitrogen separation, and specifically to a method for ammoniacal nitrogen recovery from livestock waste and wastewater, using membrane separation technology.

### Background Art

Nitrogen, vital for all living organisms, is integral to genetic molecules and proteins in plant and animal cells. The 20^{th} century's population boom largely owes to the Haber-Bosch process, which synthesizes ammonia (NH₃) for nitrogen fertilizers, crucial in food production. However, this process is energy-intensive and contributes significantly to global energy consumption (1%) and carbon dioxide emissions (2%).

Livestock excrete large amounts of NH₃ in urea, feces, and undigested proteins. This ammoniacal nitrogen in animal slurry can cause environmental contamination if not properly managed, contributing to soil nitrate leaching, water eutrophication, and health problems associated with high nitrate levels in drinking water.

The use of gas-permeable membranes is known for recovering ammonia from slurry (see Dube, P. J., et al. "Enhancing recovery of ammonia from swine manure anaerobic digester effluent using gas-permeable membrane technology." Waste Management, 2016, vol. 49 pp. 372-377). Inside them, a solution with a low pH circulates, causing the ammonia to diffuse through the membrane, and due to the low pH, ammonium ion is formed inside, allowing for easy recovery. The most common membranes currently in use are made of polyethylene (PE), polypropylene (PP), polyvinylidene fluoride (PVDF), or polytetrafluoroethylene (PTFE, Teflon), but they use what are called membrane contactors. This membrane contactors achieve their efficiency by being porous. Unfortunately, when using solutions containing solids with the membrane contactor clogging may occur, leading to fouling, and to the non-operativity of the membrane.

To address the issues associated with ammoniacal nitrogen in animal slurry, Andreu Serra-Toro et al. "Ammoniacal nitrogen recovery from pig slurry using a novel hydrophobic/hydrophilic selective membrane"; Journal of Environmental Chemical Engineering; 2022; Volume 10; Issue 5; 108434, explores the use of circular economy approaches in the agro-industrial sector, focusing also on recovering rather than removing ammoniacal nitrogen. Traditional biological removal processes, like nitrification/denitrification, are not ideal due to their greenhouse gas emissions and high energy consumption. The document proposes a planar hydrophobic/hydrophilic selective membrane for ammoniacal nitrogen recovery that operates at ambient temperature and pressure, without needing intensive aeration or reagents. It allows the diffusion of neutral molecules and some ions, including monovalent ions, and is designed to overcome the limitations of Gas-Permeable Membranes (GPM), such as clogging and the need for a highly alkaline environment.

Unlike using GPM, that for effective recovery, the slurry's pH must be increased to around 9.0 and temperatures above 25 °C to facilitate NH₃ diffusion, the membrane potentially works under less alkaline conditions such as pH 7.0-9.0) and temperatures below 25 °C, offering a cost advantage. Although it can work at acidic pH, the optimal conditions are from pH=7.0. The acidic solution on the membrane's other side captures NH₃ as ammonium sulphate, a potential fertilizer.

Other approaches for selective separation of dissolved NH₃ (aq) using membrane technology have been disclosed. For instance, CN111467933A proposes a method for selectively separating ammonia from a multi-site proton-type ionic liquid composite membrane prepared from a proton-type ionic liquid and a polymer such as polyeteheramide polymer (Pebax), a perfluorosulfonic acid polymer (Nafion), a sulfonated block copolymer (Nexar), and a microporous polymer (PIM).

US4963165 proposes a porous membrane for dissolved gas separation or pervaporation based on a composite of a microporous support membrane and an ultrathin permselective membrane, the permselective membrane comprising a polyamide-polyether block copolymer. The membrane is particularly useful in separating dissolved polar gases from dissolved non-polar gases. The polyamide-polyether block copolymer act as an antifoulding agent of the perforated support that is the one that has the filtration function.

Accordingly, from what is known in the art, there is still a need to find membranes that allow for the recovery of nitrogen, phosphor, and potassium from livestock waste and wastewater, leaving them discharged of these components and, therefore, without the polluting excess when they are applied to already saturated fields.

### Summary of Invention

Inventor have found new hydrophobic/hydrophilic tubular membranes made of polyether block amide (PEBA) that are permeable to ammoniacal nitrogen, either NH₃/NH₄⁺ (aq)_{'} from a liquid phase, or ammonia, NH₃ (g) from a gas phase. Advantageously, other ions, from a liquid phase, (mainly monovalent ions) such as K⁺, Na⁺, Cl⁻, NH₄⁺, Ca²⁺, Mg²⁺ or H₂PO₄⁻/ HPO₄²⁻ are also able to diffuse through the membrane with lower permeabilities.

Accordingly, the process of the present invention signifies a novel technology to economically recover nitrogen, as well as other ions such as monovalent ions as potassium and phosphorus, especially from slurry effluents in a farm scale. This technology can be applied to other livestock waste that contains these components in solution, such as ammoniacal nitrogen, and can also be applied to other residual waters. Its operational costs are minimum since they consist only of the electricity spent for instance to control the trapping solution pump and the base consumption to control the pH (optional depending on the required operation times and environmental temperature). Employing these membranes not only simplifies processes and reduces costs but also embodies the principles of the circular economy by transforming slurry into a valuable inorganic fertilizer. Furthermore, the membranes are quite economic and highly resistant to fouling since they are not nano-perforated.

Thus, a first aspect of the present invention relates to a process for recovering ammoniacal nitrogen, either NH₃/NH₄⁺ (aq)_{'} from a liquid phase or ammonia, NH₃ (g), from a gas phase, where: when the recovery is from a liquid phase, the process comprises permeating the nitrogen ammoniacal from a liquid phase at a working pH from 7 to 10 through a tubular membrane module to a trapping solution at a pH from 1 to 4 to yield a solution with ammonia salts; when the recovery is from a gas phase, the process comprises permeating ammonia gas through a tubular membrane module to a trapping solution at a pH from 1 to 4 to yield a solution with ammonia salts; the tubular membrane module comprises an arrangement of tubes, wherein the tubes are made of polyether block amide.

Another aspect of the present invention relates to a tubular membrane module comprises an arrangement of tubes, wherein the tubes are made of polyether block amide, wherein the tubular membrane has a ratio between the diameter and the width of the tubular membrane in a range from 15 to 60 mm/mm.

Another aspect of the present invention relates to a system for recovering ammoniacal nitrogen, specifically NH₃/NH₄⁺ (aq) from a liquid phase, comprising: a) a tank 1 comprising a tubular membrane module which comprises an arrangement of tubes, wherein the tubes are made of polyether block amide; wherein the tubular membrane is submerged in a liquid phase comprising NH₃/NH₄⁺ (aq), to chemically change the ammoniacal nitrogen to ammonia salts; b) a tank 2 comprising a trapping solution; c) a delivery system 3 for circulating the trapping solution from the tank b) to the inside of a tubular membrane module, and for carrying the salts to either a third tank or to the tank containing said trapping solution; and d) optionally, a base dispenser (to adjust the pH of the liquid phase comprising NH₃/NH₄⁺ (aq) in case it needs to be controlled; where: tank a) optionally have means for controlling temperature (not shown in the FIGs), means for controlling the pH 5, and means for controlling either ammoniacal nitrogen concentration or conductivity (not shown in the FIGs); and tank b) optionally have an agitation system 6, means for controlling temperature, means for controlling the pH 5, and means for controlling either ammoniacal nitrogen concentration or conductivity (not shown in the FIGs). This system disclosed above may also recover at the same time other ions, in particular monovalent ions such as potassium and phosphor (H₂PO₄⁻/ HPO₄²⁻).

Finally, it is also part of the invention a system for recovering ammonia, NH₃ (g), from a gas phase comprising: a) an evaporator 8 to separate from the liquid phase comprising ammoniacal nitrogen a solid waste fraction and a gas phase comprising NH₃ (g); b) a tank 1 comprising a tubular membrane module which comprises an arrangement of tubes, wherein the tubes are made of polyether block amide; wherein the tubular membrane is in a gas phase comprising NH₃ (g), to chemically change the ammoniacal nitrogen to ammonia salts; c) a tank 2 comprising a trapping solution; d) a delivery system 3 for circulating the trapping solution from the tank c) to the inside of a tubular membrane module, and for carrying the salts to either a third tank or to the tank containing said trapping solution; and where: tank a) optionally have means for controlling temperature (not shown), means for controlling the pH 5, and means for controlling either ammoniacal nitrogen concentration or conductivity (not shown); and tank b) optionally have an agitation system 6, means for controlling, means for controlling the pH 5, and means for controlling either ammoniacal nitrogen concentration or conductivity.

The process of the present invention allows the treatment of effluents (liquid phase comprising ammoniacal nitrogen) such as slurry to obtain high-value products in a way that reduces the impact on the environment. Thus, all the effluents generated in the different stages can have a specific application. In particular, the main advantage of recovering the nitrogen from for instance a swine slurry liquid fraction is that this effluent could be used as irrigation water with an organic fertiliser value without the threat of nitrifying the soils and ground waters. The removal of nitrogen from the swine slurry liquid fraction can be adjusted depending on the necessities of the farm and the field area where they can apply it. Nowadays, regulations are getting more restrictive about the use of swine manure in agriculture, what makes even more necessary to control it.

Thus, a concentrated solution of (NH4)₂SO₄ (ammonium sulphate) with fertilising value is obtained. It also contains some ions such as K⁺ and H₂PO₄⁻/ HPO₄²⁻ that are an added value to the agriculture while heavy metals and other organic pollutants of high molar mass or with aromatic parts are kept on the slurry and do not cross through the tubular membrane module to the trapping solution.

### Brief Description of Drawings

FIG. 1 shows the temporal evolution of the total ammonia nitrogen (TAN) concentration both in the feed and trapping dissolution of Example 1 membrane 0.8 mm.
FIG. 2 shows the temporal evolution of the TAN concentration both in the feed and the trapping dissolution of Example 1 membrane 1.8 mm.
FIG. 3 shows a tubular membrane according to the present invention.
FIG. 4 is a Laboratory-scale device diagram of the system to recover ammoniacal nitrogen from liquid phase. The system has: Tubular membranes inside a tank 1 with liquid phase (feed solution); An extractor acid solution tank 2 (trapping solution); A pump; A controller of basic pH, T, and ammonia 4; A controller of acid pH, T, and ammonia 5; A Stirrer 6; Probes 7.

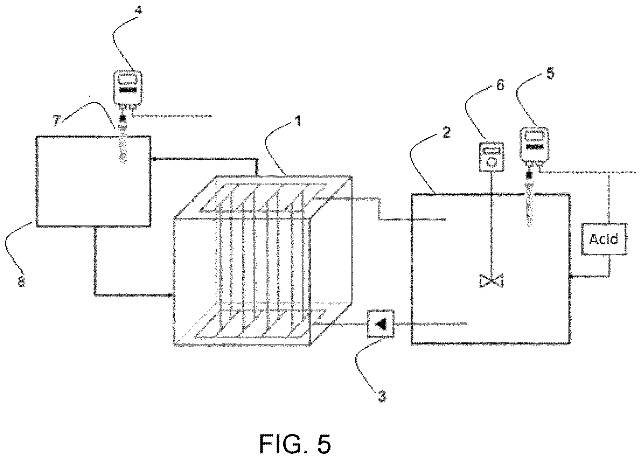

FIG. 5 is another Laboratory-scale device diagram of the system to recover ammoniacal nitrogen from gas/vapour phase. The system has: Tubular membranes inside a tank 1 with liquid phase (feed solution); An extractor acid solution tank 2 (trapping solution); A pump; A controller of basic pH, T, and ammonia 4; A controller of acid pH, T, and ammonia 5; A Stirrer 6; Probes (7); Steam tank (8) with ammonia coming from the evaporator

### Detailed description of the invention

All terms as used herein in this application, unless otherwise stated, shall be understood in their ordinary meaning as known in the art. Other more specific definitions for certain terms as used in the present application are as set forth below and are intended to apply throughout the description and claims.

As used herein, the indefinite articles "a" and "an" are synonymous with "at least one" or "one or more." Thus, as used herein, the singular forms "a", "an", and also the definite article "the" include plural referents unless the context clearly dictates otherwise".

As used herein, the terms "comprise", "comprises", "comprising", "include", "includes", and "including" are meant to be non-limiting, i.e., they are used to specify the presence of the stated components but do not preclude the presence of additional components, unless the contrary is specifically stated. These terms also include the term "consisting essentially of" or "consisting of".

Unless indicated otherwise, the percentages (%) used in the present description refer to weight percentages (weight/weight, w/w).

The term room temperature (RT) as used herein refers to room temperature, which is in a range between 20°C and 30°C.

The term "effluent" as used herein refers to outflows of liquid waste, including livestock waste and wastewater, that contain dissolved substances such as ammoniacal nitrogen and other components. These effluents are typically discharged from agricultural or industrial processes and require treatment or management to prevent environmental contamination. The term "liquid phase comprising nitrogen ammoniacal" refers to such effluents, both terms "effluents" have been used interchangeably.

The term "reticular" as used herein refers to a structure that is characterized by a network-like or mesh-like arrangement. This geometric configuration consists of interconnected elements that form a net-like pattern, providing a combination of strength and flexibility. In the context of the tubular membrane module described herein, "reticular geometry" denotes a design where the structural components are interwoven or interconnected in a manner that resembles a net or lattice.

Advantageously, the present invention introduces a method for producing ammonium sulphate from manure, offering an alternative to the one synthetized from NH₃ obtained from Haber-Bosch process, which currently generates 100 million tons of nitrogen fertilizer annually, primarily as anhydrous ammonia, ammonium nitrate, and urea. Although the Haber-Bosch method is well-developed and optimized, it has significant drawbacks, including high greenhouse gas (GHG) emissions exceeding 2.16 kg CO₂/kg NH₃ and substantial energy consumption due to its operation at high temperatures and pressures.

This new method aims to reduce GHG emissions, particularly by decreasing the NH₃ content in manure by 60%, thus allowing its use as organic fertilizer over a smaller area and significantly lowering GHG emissions from tractors. Ammonia, while not a direct greenhouse gas, contributes to acid rain and eutrophication, potentially affecting soil and water quality. It also contributes to atmospheric particulate matter formation, adversely affecting human health and indirectly emitting nitrous oxide, a potent GHG.

Thus, by recovering NH₃ as ammonium sulphate, this approach not only eliminates NH₃ emissions due to its volatility but also significantly reduces GHG emissions compared to the Haber-Bosch process, with a reduction equivalent to 2.3 t CO₂/t NH₃. The remaining 55% of NH₃ in the liquid manure portion represents an 84 kt/CO₂/year reduction, or 10.5 kg/CO₂/year/swine. Additionally, transporting the dry manure would considerably reduce the number of trucks needed, further decreasing GHG emissions compared to the current transport of liquid manure for composting or biogas treatment. As mentioned above, the process for recovering ammoniacal nitrogen, either NH₃/NH₄⁺ (aq)_{'} from a liquid phase, or ammonia, NH₃ (g) from a gas phase is part of the invention, where: when the recovery is from a liquid phase, the process comprises permeating the nitrogen ammoniacal from a liquid phase at a pH from 7 to 10 through a tubular membrane module to a trapping solution at a pH from 1 to 4, to yield a solution comprising ammonia salts; and when the recovery is from a gas phase, the process comprises permeating ammonia gas through a tubular membrane module to a trapping solution at a pH from 1 to 4, to yield a solution with ammonia salts; the tubular membrane module comprises an arrangement of tubes, wherein the tubes are made of polyether block amide.

The process may also recover at the same time other ions, in particular monovalent ions such as potassium and H₂PO₄/HPO₄²⁻ when the recovery is from a liquid phase.

In a particular embodiment, the process of the present invention is that where the solution with ammonia salts further comprises ions selected from the group consisting of: K⁺, Na⁺, Cl⁻, Ca²⁺, Mg²⁺, H₂PO₄⁻/HPO₄²⁻, and mixtures thereof, and the process further comprises permeating the ions from the liquid solution to the trapping solution through the tubular membrane the selective separation of monovalent ions selected from the group consisting of: K⁺, Na⁺, Cl⁻, Ca²⁺, Mg²⁺, H₂PO₄⁻/HPO₄²⁻, and mixtures thereof.

In a particular embodiment, the process as defined above is that where the trapping solution at a pH from 1 to 4 is aqueous sulfuric acid yielding a solution with (NH₄)₂SO₄.

The liquid phase comprising ammoniacal nitrogen used as starting material of the process is rich in total ammoniacal nitrogen (TAN) and other elements of interest as fertilizers such as potassium or phosphorus. In a particular embodiment of the process, the such liquid phase, for instance can be a slurry effluent and be obtainable by a solid-liquid separation of swine manure. The tubular membranes of the present invention can work either with a reduced solid part in suspension with a solid-liquid separation process or with high concentrations of suspended solids in the slurry; therefore, the subsequent separation stage is sufficient to allow the slurry to pass through the membranes. By working with the minimum amount of suspended solids, the membranes are less prone to fouling and have a longer service life.

The solid-liquid separation to obtain the liquid fraction of the swine manure is conducted by separating the swine manure that is collected from the pond into two effluents: a liquid fraction that can be subsequently treated according to the process of the present invention and a slurry with low moisture that is suitable for fertilizing the fields and is easier to transport. Thus, in a particular embodiment of the process, the effluent liquid fraction is obtainable by a solid-liquid separation of swine manure.

Depending on the effluent, separation can be done using sieves or centrifuges. However, at the farm level, the most common treatments are by gravity, applying pressure, or centrifuging.

Depending on the method and the time period used, liquid fractions can be obtained with a maximum particle size in suspension between 250 and 700 microns through commercial treatments on farms. If done in the laboratory with sieves, it can be done down to a maximum size of 50 or 100 microns.

In a particular embodiment, the process as defined above is that which comprises: a1) circulating a trapping solution from an extractor tank to the inside of a tubular membrane module submerged in a tank which comprises the liquid phase comprising ammoniacal nitrogen, to chemically change the ammoniacal nitrogen to ammonia salts, yielding to a solution comprising ammonia salts; and a2) circulating the solution with ammonia salts obtained in step a1) to either another tank or to the tank containing said trapping solution; or, alternatively, b1) first introducing the liquid phase comprising ammoniacal nitrogen into an evaporator to separate from the liquid phase a solid waste fraction and a gas comprising ammoniacal nitrogen; b2) circulating a trapping solution from a tank to the inside of a tubular membrane module; b3) circulating the gas comprising ammoniacal nitrogen from the evaporator to a tank comprising the tubular membrane module, where the gas contacts the trapping solution to chemically convert the ammoniacal nitrogen into ammonia salts, resulting in a solution comprising ammonia salts; and b4) circulating the solution comprising ammonia salts obtained in step b3) to either another tank or to the tank comprising said trapping solution.

In a particular embodiment, the process as defined above, further comprising a previous step to steps a1) or b1) which comprises a solid-liquid separation phase to yield a solid material for use as fertilizer and a liquid fraction comprising ammoniacal nitrogen which is the starting liquid phase as defined above.

In a particular embodiment, the process as defined above is that where the liquid phase is slurry. In another particular embodiment, the process as defined above is that where the liquid phase is swine slurry. In another particular embodiment, the process as defined above is that where the liquid phase is slurry from livestock. In another particular embodiment, the process as defined above is that where the liquid phase is residual water.

Generally, in all these processes, the slurry ponds and tanks are covered to avoid NH₃ evaporation into the atmosphere.

The key step of the processes is the processing step in the membrane module of the present invention to extract the ammoniacal nitrogen. Its operation can be determined by setting the operation time, the desired ammoniacal nitrogen recovery, or the membrane area, among others. The maximum recoveries are determined by the operation conditions. At 20°C and a typical swine pH of 8.5, the recovery may be for instance around 55% while raising the pH at 9 or 10, it may move for instance to a 60 or 70%, respectively. The transfer velocity is also related to these parameters, thus the best relation between pH (NaOH consumption) and operation duration must be chosen depending on the desired nitrogen recovery.

In a particular embodiment, the process is conducted at a pH in a range from 8.5-10, when necessary, the pH of the feed solution (e.g. slurry liquid fraction) is adjusted with a base such as sodium hydroxide. In another particular embodiment the feed solution is at a pH comprised in the range 9-10. In another particular embodiment, the process of the present invention is conducted at a pH in a range from 8 to 9. Generally, the pH is adjusted with a base such as NaOH. The pH may be controlled by known methods such as by using a pH-meter.

In a particular embodiment, the process is conducted at room temperature (20-30 °C). It has been found that when the separation is conducted at high temperatures the membrane performance is enhanced since it leads to a lower pKa value and therefore, the fraction of NH₃ increases, as opposed to hydrophobic commercial gas-permeable membranes, this membrane can work at low pH and temperature values even at lower efficiencies thanks to the pass of the ammonium ion. In a particular embodiment, the separation is conducted at a temperature comprised in a range from 25 to 30 °C. It has been found that at such temperatures the membrane performance is enhanced since it leads to a lower pKa value and therefore, the fraction of NH₃ increases.

The process of the present invention comprises the treatment of a liquid phase comprising ammoniacal nitrogen such as a slurry effluent to obtain high-value products in a way that reduces the impact on the environment. Thus, all the effluents generated in the different stages can have a specific application.

In a particular embodiment of the process where the recovery is from a liquid phase, the process further comprises concentrating the solution with ammonia salt obtained in step b) to yield an aqueous concentrated solution of ammonia salts. This further concentration of the inorganic fertiliser is conducted to valorise the ammonium sulphate solution. Other ions such as Na⁺, K⁺, Cl⁻ or PO₄H₂⁻/PO₄H₂⁻ are also concentrated in this step. This step can be conducted by evaporation. A drying process allows water to be removed without ammonia. Due to the acidic pH of the solution of ammoniacal nitrogen is in the form of ammonium, which is not volatile. An ammonium sulphate rich solution concentrated in valuable ions which is industrially valuable is obtained. Furthermore, the volume reduction makes the effluent easier to transport. Thus, an aqueous concentrated solution of ammonia salts obtainable by the process explained above is also part of the present invention. Finally, the use of the aqueous concentrated solution as defined above as an inorganic fertilizer is also part of the present invention.

Alternatively, the concentration can be conducted by crystallization. In this case the drying ends when a solid product is obtained.

The process of the present invention may be conducted in a continuous or discontinuous mode.

All the particular embodiments mentioned above in any combination of them are also part of the present invention.

Apart from the ammonium sulphate solution resulting from the membrane that after concentration as explained above can be used as inorganic fertilizer, the other output after the membrane process is the liquid slurry fraction with a reduced TAN concentration that may also have several applications. This reduction depends on the membrane area, pH, and temperature present, as well as the maximum recovery value that can be obtained.

Such liquid slurry fraction with a reduced TAN concentration may be used for irrigation as it does not require any additional energy consumption. With this effluent (organic fertiliser), more fields could be irrigated because, since the nitrogen has been removed, there is more room to exceed the nitrogen limit per cultivated hectare. Alternatively, phosphorous can be recovered from this slurry through precipitation, either of some salt (usually calcium, aluminium, and iron salts) or struvite (NH₄MgPO₄). Struvite only requires magnesium to be added to the solution as there is still ammonium in low concentration and it has a high value as a fertiliser as it offers both nitrogen and phosphorus and releases them slowly into the soil. Other option may consist of recovering phosphates using the membrane used to recover NH₃ by using an acidic slurry pH instead of a basic one to have H₂PO₄⁻, the form capable of crossing the membrane.

The water of the liquid slurry fraction with a reduced total ammoniacal nitrogen (TAN) concentration can also be evaporated to obtain a solid residue low in ammoniacal nitrogen suitable for use as fertilizer. The evaporation may be carried out in two ways: a) Via direct evaporation of the liquid phase to obtain a gaseous mixture with a high content of water vapor and ammonia which then be treated with the membrane to remove the ammonia gas; b) Via evaporation of the saline solution so that it is obtained a more concentrated liquid solution (20% ammonium sulphate), or directly obtain the solid (crystalline) salt, and a further step may allow for the recovery of ammonia that had also volatilized during the evaporation. This option may be conducted with the tubular membranes of the present invention and with other commercial modules that can work with clean effluents. Advantageously, no loss of ammonia to the atmosphere, and even more ammoniacal nitrogen is recovered in the form of ammonium sulphate.

Thus, in a particular embodiment, the process as defined above is that where the process is conducted at room temperature.

In another particular embodiment, the process as defined above is that where the process further comprises concentrating the solution with ammonia salts obtained in step b) to yield an aqueous concentrated solution of ammonia salts.

The tubular membrane module used in the process of the present invention is considered also part of the present invention. It comprises at least a tubular membrane made from polyether block amide, wherein the tubular membrane has a ratio between the diameter and the width of the tubular membrane in a range from 15 to 60 mm/mm. In a particular embodiment, the tubular membrane has a ratio between the diameter and the width of the tubular membrane in a range from 20 to 50 mm/mm. In another particular embodiment, the tubular membrane has a ratio between the diameter and the width of the tubular membrane in a range from 25 to 45 mm/mm. In another particular embodiment, the tubular membrane has a ratio between the diameter and the width of the tubular membrane in a range from 30 to 40 mm/mm. Advantageously, they are useful in the ammonia recovery by itself, that is, without forming part of a composite comprising a microporous support, being easy to use and allowing an efficient recovery of nitrogen. Thus, the tubular membranes according to the present invention are made of polyether block amide as only polymer. In addition, they are not supported on a support membrane, in particular, they are not supported on a microporous support membrane. It may also be defined as a monolithic ammonia permeable membrane.

The polyether block amide used to prepare the membranes of the present invention is a multiblock copolymer with two types of segments, rigid polyamide (PA) and flexible polyether, known under the trade name Pebax^{®}. It is obtained by polycondensation reaction of a carboxylic acid polyamide (e.g. PA6, P11, P12) with an alcohol-terminated polyether either polytetramethylene glycol (PTMG) or polyethylene glycol (PEG) with general chemical structure as shown below:

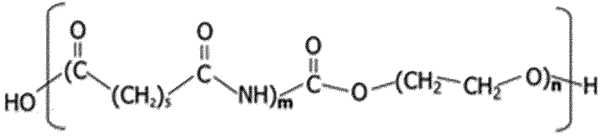

Polyether block amide Pebax^{®} is commercially available, for example from Arkema. The properties of these polymers, as disclosed in the literature. The viscoelastic properties of these materials provide to the tubular membrane with a good stress/strain behaviour, flexibility, and resistance to acid corrosion.

In a particular embodiment, the polyether block amide used for the membrane has a melting temperature when heated at a rate of 10°C in a range from 150 to 160°C measured a Differential Scanning Calorimeter (DSC)

In another particular embodiment, the polyether block amide used for the membrane has a melting temperature when heated at a rate of 10°C of 158°C measured by a Differential Scanning Calorimeter. In a particular embodiment, the polyether block amide used for the membrane has a glass transition temperature when heated at a rate of 10°C in a range from -45 to -35°C measured by a Differential Scanning Calorimeter.

In another particular embodiment, the polymer used for the membrane has a glass transition temperature when heated at a rate of 10°C of -40°C measured by a Differential Scanning Calorimeter.

In a particular embodiment, the polyether block amide used for the membrane has a tensile modulus is in a range from 70 to 110 MPa measured using standardized test tubes with a universal tensile testing machine.

In another particular embodiment, the polyether block amide used for the membrane has a tensile modulus is in a range from 80 to 100 MPa measured using standardized test tubes with a universal tensile testing machine.

In another particular embodiment, the polyether block amide used for the membrane has an elongation at break in a range from 50 to 80% measured using standardized test tubes with a universal tensile testing machine.

In another particular embodiment, the polymer used for the membrane has an elongation at break in a range from 50 to 60% measured using standardized test tubes with a universal tensile testing machine.

In a particular embodiment, the polyether block amide used for the membrane has a density in a range from 1060 to 1080 kg/m³ measured by a Helium pycnometer.

In another particular embodiment, the polymer used for the membrane has a density of 1070 kg/m³ measured by a Helium pycnometer.

The tubular membrane according to the invention have a hydrophobic/hydrophilic character.

In a particular embodiment of the tubular membrane, the ratio between the diameter and the width of the tubular membrane is in a range from 15 to 60 mm/mm. In another particular embodiment of the tubular membrane, the external diameter of the tube is in a range of 8 to 18 mm. In another particular embodiment of the tubular membrane, the membrane has a thickness in the range from 0,3 to 0.5 mm.

In another particular embodiment, the tubular membrane according to the invention is obtainable by extrusion. A tubular configuration of the membrane enhances its mechanical stability for the intended purpose disclosed herein. Additionally, it maximizes the contact surface area between the slurry and the membrane.

As a way of example, the process of extrusion begins by filling the hopper with virgin PEBA granules, which are received in the form of small granules or pellets. This filling is done with automatic feeders that draw the material into the extruder hopper. By gravity, the material enters the barrel of the extruder and is moved from the beginning or feed zone to the end or head zone. This movement within the barrel is carried out by the screw, which displaces the material as it rotates. The extruder has a series of heaters that warm the barrel, achieving the necessary temperature in the barrel and the screw for transforming the PEBA granules into a uniform mass. A nozzle/die relationship must be pre-mounted on the head to obtain the desired thickness and an initial outer diameter, which is achieved by passing the molten material mass through the head. Once the material passes through the head, a continuous tube is formed to an initial diameter, which is subsequently adjusted to the final size when it enters the vacuum bath with the help of the calibrator. When the extruded and calibrated material exits the vacuum bath, it is submerged in cooling tanks with water controlled at 15°C until it reaches the haul-off unit, which moves or drags the material from the extruder outlet to the next phase, which will be either winding or cutting, depending on whether we want to obtain cut pieces or rolls.

The tubular membrane of the present invention may be packed in a tubular membrane module comprising at least a tubular membrane. In a particular embodiment, the tubular membrane used in the process according to the present invention is packed into modules. In another particular embodiment, the tubular membrane used in the process according to the present invention is packed into two modules. In a particular embodiment, the distance between the tubular membranes in the modules is in a range from 2-4 cm. In a particular embodiment, the distance between the tubular membranes is 3 cm.

In a particular embodiment, the tubular membrane module as defined above is that where the tubular membrane module has an arrangement of linear tubes with a reticular geometry.

In a particular embodiment, the membrane module is deposited into a tank which comprises either the liquid fraction slurry or the gas rich in ammoniacal nitrogen. The membrane area allows reaching a determined nitrogen recovery percentage in a fixed time.

A system for recovering ammoniacal nitrogen, either NH₃/NH₄⁺ (aq) from a liquid phase is also part of the present invention, the system comprising: a) a tank 1 comprising a tubular membrane module which comprises an arrangement of tubes, wherein the tubes are made of polyether block amide; wherein the tubular membrane is submerged in a liquid phase comprising NH₃/NH₄⁺ (aq), to chemically change the ammoniacal nitrogen to ammonia salts; b) a tank 2 comprising a trapping solution; c) a delivery system 3 for circulating the trapping solution from the tank b) to the inside of a tubular membrane module, and for carrying the salts to either a third tank or to the tank containing said trapping solution; and d) optionally, a base dispenser 9 to adjust the pH of the liquid phase comprising NH₃/NH₄⁺ (aq) in case it needs to be controlled; where: tanks a) optionally have means for controlling temperature (not shown), means for controlling the pH 5, and means for controlling either ammoniacal nitrogen concentration or conductivity (not shown); and tank b) optionally have an agitation system 6, means for controlling temperature (not shown), means for controlling the pH 5, and means for controlling either ammoniacal nitrogen concentration or conductivity (not shown).

Finally, a system for recovering ammonia, NH₃ (g), from a gas phase is also part of the present invention, the system comprising: a) an evaporator (8) to separate from the liquid phase comprising ammoniacal nitrogen a solid waste fraction and a gas phase comprising NH₃ (g); b) a tank 1 comprising a tubular membrane module which comprises an arrangement of tubes, wherein the tubes are made of polyether block amide; wherein the tubular membrane is in a gas phase comprising NH₃ (g), to chemically change the ammoniacal nitrogen to ammonia salts; c) a tank 2 comprising a trapping solution; d) a delivery system 3 for circulating the trapping solution from the tank c) to the inside of a tubular membrane module, and for carrying the salts to either a third tank or to the tank containing said trapping solution; and where: tank a) optionally have means for controlling temperature (not shown), means for controlling the pH 5, and means for controlling either ammoniacal nitrogen concentration or conductivity (not shown); and tank b) optionally have an agitation system 6, means for controlling temperature (not shown), means for controlling the pH 5, and means for controlling either ammoniacal nitrogen concentration or conductivity (not shown).

In a particular embodiment or any of the systems mentioned above, the system is also for recovering other ions, in particular, potassium and phosphor.

The delivery system may be a pump. Generally, the base of the base dispenser is sodium hydroxide.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim and shall not be construed as limiting the scope of the claim. Furthermore, the present invention covers all possible combinations of particular and preferred embodiments described herein.

### Examples

### Example 1: Preparation of a tubular membrane

Different Pebax membranes have been obtained by extrusion from different kinds of Pebax copolymers.

From Pebax^{®}MV 1074 SP 01 resin, it was obtained a tubular membrane with a diameter of 8 mm and a width of 0.4 mm, and from Pebax ^{®} MV 1074 SA 01 resin, it was obtained a tubular membrane with a diameter of 18 mm and a width of 0.4 mm.

The extrusion process comprised filling the PEBAX starting material in the form of small pellets into the extruder hopper by using automatic feeders that suction the material up. The material then naturally felled into the extruder barrel, where it was moved from the feed zone at the beginning to the head zone at the end. This movement within the barrel was facilitated by a screw that rotated, pushing the material along. The extruder was equipped with a series of heaters that warm the barrel, achieving the necessary temperatures in both the barrel jacket and the screw to transform the PEBAX granules into a uniform mass. The temperature in the extruder was controlled across the different zones of the extruder. Before the material entered the head, a specific die/nozzle combination was mounted to achieve the desired thickness and a preliminary external diameter. As the molten mass passed through the head, it formed into a continuous tube that then enters a vacuum bath to be sized to its final dimensions with the aid of a calibrator. After this, the extruded and calibrated material exited the vacuum bath and was submerged in cooling tanks with water controlled at 15°C until it reached the puller, which transported the material from the extruder's outlet to the next phase.

### Example 2: Use of the tubular membrane for recovering ammoniacal nitrogen using the tubular membranes of Example 1

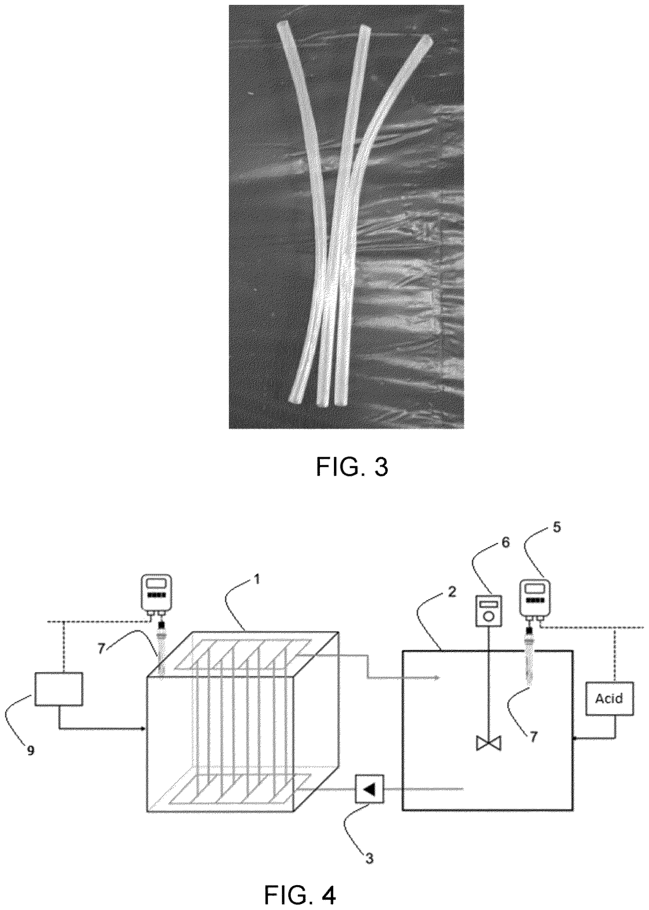

The experiments were performed using two solutions at different pHs, one, the feed solution, containing the solution with a TAN concentration (either synthetic or from the liquid fraction of swine manure dejection) with a pH controlled (9-10) and another one, the trapping solution, containing a solution of H₂SO₄ at controlled pH around 1.25. The feed solution was immersed in a tank of volume V_{f} where there was a series of linear tubes of the membrane, through which the sulfuric acid solution circulates, which was connected to the tank of the trapping solution of volume Vₜ with a circulation of the liquid maintained by a bomb. The experiment was carried out over a few days so that an aliquot of each solution was taken at different times to see how the concentration of TAN varies, both inside the tank where the feed solution was, and from the tank where there was the trapping solution, as well as that of the different ions of interest that could pass through the tubular membrane. The system for recovering ammoniacal nitrogen was the one shown in FIG. 4

### a) Results obtained with tubular membranes with 8 mm in diameter

Different experiments were performed with the tubular membrane with 8 mm in diameter of Example 1. Two different feed solutions were used, one with a synthetic solution of NH₄Cl at pH = 9.0 with an initial TAN concentration of 3.15 g/l, and a pH = 10.0 with an initial concentration of 5.5 g/L, and another with a fresh swine manure dejection at pH = 9.0 with and initial TAN concentration of 2.5 g/L. For these experiments the tank volumes of feed and trapping solution were V_{f} = Vₜ = 8 L, and the total area of the tubular membrane was A = 0.129 m². The experiments were performed at room temperature, around 20 °C.

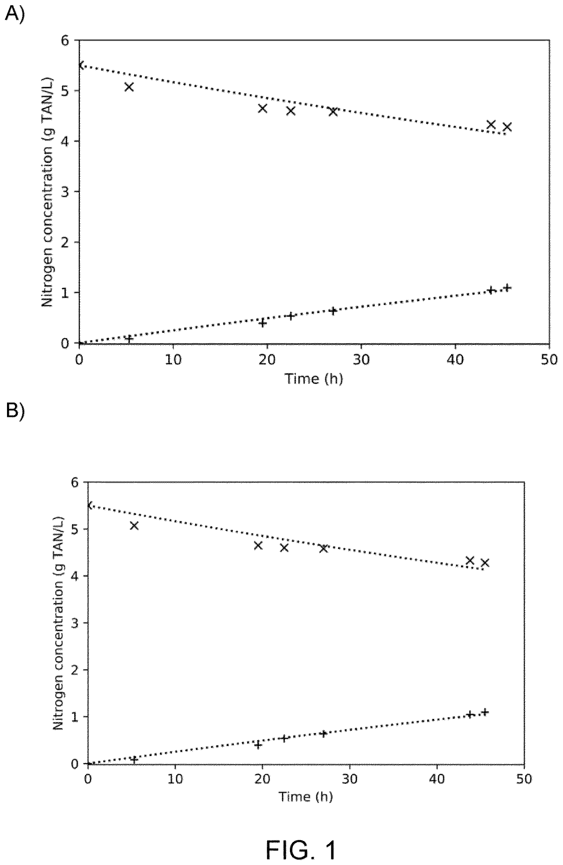

The temporal evolution of the total ammonia nitrogen (TAN) concentration both in the feed and trapping dissolution of Example 1 membrane 8 mm is shown in FIG.1. The results indicate that NH₃ and NH₄⁺ pass through the tubular membrane with a small amount of water passing through the tubular membrane from feed to trapping solution with a loss of volume around (2-5) %, due to the different of osmotic pressure between both solutions. Moreover, some small cations and anions, majority univalent, also pass through the tubular membrane (see the chemical analysis below). The experiment was carried out in a closed system, so that NH₃ emissions by evaporation were avoided as much as possible. With this, from a material balance of the initial TAN, it was seen that the losses were negligible, between (2-5) %.

### b) Results obtained with tubular membranes with 18 mm in diameter

Since the permeability of TAN species passing through the tubular membrane, which are necessary to be able to design the process on a farm scale, experiments were done with another resin, Pebax ^{®} MV 1074 SA 01, to reduce the thickness of the tubular membrane, and in this way increase the permeability, and maintaining and improving the mechanical properties of the tubular membrane obtained by extrusion. The parameters of this new tubular membrane were 18 mm of diameter with 0.4 mm of width.

The experiments performed with this tubular membrane were using a synthetic solution of NH₄Cl at pH = 10.0 with an initial TAN concentration of 2.77 g/L, and another with a fresh swine manure dejection at pH = 9.0 with different initial TAN concentration of 2.29, 2.52 and 3.0 g/L. For these experiments the tank volumes of feed and trapping solution were V_{f} = Vₜ = 2 L, and the total area of the tubular membrane was A = 0.0044 m². The experiments were performed at room temperature, around 20 °C.

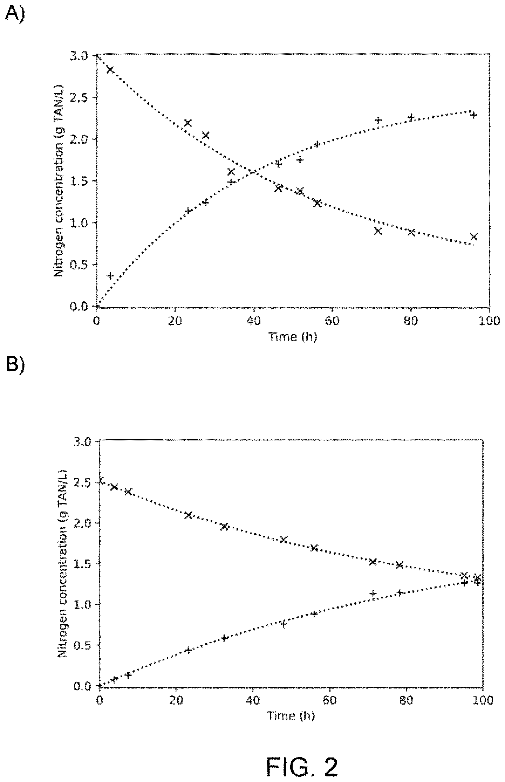

The temporal evolution of the TAN concentration both in the feed and the trapping dissolution of Example 1 membrane 1.8 mm is seen in FIG. 2. The results indicate that NH₃ and NH₄⁺ pass through the tubular membrane with a small amount of water passing through the tubular membrane from feed to trapping solution with a loss of volume around (2-5) %. The NH₃ emissions by evaporation were avoided as much as possible. With this, from a material balance of the initial TAN, it was seen that the losses are negligible, between (2-5) %.

### Example 3: Estimation of the % recovery of ions by the tubular membrane

### Considerations:

- Results from the slurry at pH=9 (20 °C) with the 18 mm tubular membrane
- pKₐ of NH₄⁺ depends on the temperature. At 20 °C, pKa = 9.4
- Tubular membrane area: A = 0,0044 m²
- Feed volume: Vₜ= 2 L
- P_{NH3} = (2.7 ± 0.2) × 10⁻⁶ m/s; P_{NH4+} = (3.7 ± 0.1) × 10⁻⁷ m/s
- Maximum recovery of TAN (N-ammoniacal): 73.67%

### Suppositions:

- 1 m³ tank where we will submerge 0.75 m tubes.
- The required area will be calculated to recover a certain % of TAN in 20 h.
- it will work with 18 mm tubes at pH=9 and 20 °C.
- Estimated membrane permeabilities are taken from experiments done with the 18 mm tubular membrane.
- For the concentration of ammonium sulphate, we assume that the slurry has a concentration of 5.5 g/L of TAN. An equal ratio of volumes is assumed, otherwise the ratio of volumes will have to be considered.

Table 1 shows the % of nitrogen recovered.

**Table 1:**

| %rec N | A (m²) | L tubes (m) | # tubes | g/L TAN | %N (g/100 mL) | %(NH₄)₂SO₄ (g/100 mL) |
|---|---|---|---|---|---|---|
| 50 | 11.22 | 188.03 | 251 | 2.75 | 0.275 | 1.30 |
| 60 | 16.65 | 278.95 | 372 | 3.30 | 0.330 | 1.56 |
| 65 | 21.15 | 354.37 | 472 | 3.58 | 0.358 | 1.69 |
| 70 | 29.65 | 496.78 | 662 | 3.85 | 0.385 | 1.81 |

Table 2 shows the Ion % recovery results:

**Table 2:**

| Ionic specie | P (10⁻⁷ m/s) | rec (%) | Initial conc. (g/L) | Recovery (g/L) |
|---|---|---|---|---|
| Na⁺ | 3.9 ± 0.2 | 50 | - | - |
| Cl⁻ | - | 50 | - | - |
| K⁺ | 5.8 ± 0.4 | 50 | 2.66 | 1.33 |
| PO₄H²⁻ /PO₄H₂⁻ | 0.79 ± 0.06 | 50 | 2.82 | 1.41 |

- Dissolved phosphate (H₂PO₄⁻/HPO₄²⁻) is a weak acid that is in acid-base equilibrium between the two predominant species at pHs around pKₐ₂=7.20, (pKₐ₁=2.14, pKₐ₃=12.37).
- The values for Na⁺ are estimates, since we add NaOH to the feed to control the pH.
- Divalent ions, such as Mg²⁺ and Ca²⁺, can pass through the tubular membrane but in very small amounts.

### Example 4: Characterisation of the extractor solution in comparison with slurry and solutions obtained with other tubular membranes.

In order to determine the fertilising value of the ammoniacal nitrogen extraction solution, an exhaustive characterisation was carried out in which metals, various ions and organic and inorganic carbon were analysed. The values given below are those of the following effluents:
- Fresh or unfiltered slurry.
- Filtered slurry from which nitrogen was removed with a gas permeable membrane (GPM).
- Filtered slurry after removal of nitrogen.
- Extraction solution (trapping) obtained with the GPM (after 20 hours of operation).
- Slurry with a small filtration after removing the nitrogen with the tubular membrane.
- Extraction solution obtained with the tubular membrane (after 100 hours of operation).

### Analysis of metals:

As can be seen in Table 3, the concentration values of 8 metals (arsenic, zinc, lead, cadmium, mercury, copper, manganese and lithium) are represented in ppb or µg/kg.

**Table 3. Concentration in ppb of the 8 metals analysed and their standard deviation.**

| Sample (ppb) | As | Zn | Pb | Cd | Hg | Cu | Mn | Li |
|---|---|---|---|---|---|---|---|---|
| slurry unfiltered | 36,2 ± 3,08 | 54,2 ± 1,25 | 47,8 ± 1,28 | 11,9 ± 0,50 | 26,1 ± 2,66 | 14,8 ± 0,09 | 37,9 ± 0,14 | 215 ± 0,4 |
| slurry filtered | 9,41 ± 0,11 | 1,29 ± 0,03 | 2,47 ± 0,43 | 1,31 ± 0,04 | 10,5 ± 0,02 | 449 ± 1 | 118 ± 1 | 67,7 ± 2,02 |
| GPM : Slurry after the recovery process | 9,59 ± 0,90 | 1,26 ± 0,01 | 3,27 ± 0,15 | 3,61 ± 0,11 | 17,7 ± 1,11 | 451 ± 5 | 115 ± 3 | 67,7 ± 1,00 |
| GPM: Trapped solution after the recovery process | 3,69 ± 3,42 | 32,0 ± 0,57 | 2959 ± 6 | 3,48 ± 0,82 | 0,34 ± 0,14 | 4094 ± 235 | 5,92 ± 2,42 | 9,50 ± 0,42 |
| tubular membrane Slurry after the recovery process | 13,2 ± 0,53 | 8,33 ± 0,08 | 8,13 ± 0,24 | 0,41 ± 0,17 | 24,7 ± 1,19 | 2,75 ± 0,06 | 1077 ± 9 | 62,5 ± 0,01 |
| tubular membrane slurry the recovery process | 1,95 ± 0,06 | 234 ± 19 | 7,28 ± 0,05 | 0,09 ± 0,02 | 4,81 ± 0,10 | 6,81 ± 0,26 | 122 ± 2 | 16,2 ± 1,56 |

According to the previous results, the metals are removed when the solids are removed from the slurry, i.e. when it is filtered, since the concentration of metals decreases in all the slurries compared to the first one. It can also be seen that the concentration of metals in the slurry does not vary before and after passing through the tubular membrane (the difference is within the range of the standard deviation). This is since there is little or no metal passage to the extracting solution. In the case of the extracting solution of the GPM, only Zn is detected, Pb and Cu have high values because the tubular membrane contactor has some metallic fish that could leave these traces. In the case of the MV extraction solution, As, Cd and Cu are not detected, while the remaining metals are detected at very low values far below any of the limits of the fertiliser regulations. Zn and Mn are much easier to grow, so both are essential trace elements for the development of plants.

### Ion analysis.

Table 4 shows the concentration values of 7 ions (sulphur, potassium, magnesium, calcium, sodium, iron, and phosphorus) represented in ppb or µg/kg. Values shaded with the colour of the sample mean that the concentration is below the detection limit and is therefore considered 0.

**Table 4 Concentration in ppb of the 7 analysed elements and their standard deviation.**

| Sample (ppb) | S | K | Mg | Ca | Na | Fe | P |
|---|---|---|---|---|---|---|---|
| Slurry unfiltered | 530 ± 12 | 3928 ± 29 | 1026 ± 8 | 1768 ± 8 | 1400 ± 50 | 128 ± 0,4 | 1186 ± 32 |
| slurry filtered | 176 ± 7 | 3597 ± 29 | 66,8 ± 0,3 | 50,8 ± 0,5 | 1249 ± 0,3 | 3,66 ± 0,04 | 20,3 ± 4,0 |
| GPM : Slurry after the recovery process | 166 ± 5 | 3636 ± 65 | 66,0 ± 0,9 | 44,8 ± 1,0 | 4873 ± 5 | 4,33 ± 0,18 | 20,1 ± 0,6 |
| GPM: Trapped solution after the recovery process | 33 699 ± 882 | 10,1 ± 2,8 | 3,13 ± 3,06 | | | 0,18 ± 0,07 | |
| tubular membran e Slurry after the recovery process | 264 ± 1 | 2502 ± 29 | 62,3 ± 0,7 | 52,4 ± 0,6 | 5812 ± 70 | 20,9 ± 0,2 | 47,2 ± 3,6 |
| tubular membran e slurry the recovery process | 3,50 ± 0,42 | 1048 ± 9 | 9,20 ± 0,13 | 6,77 ± 0,13 | 1262 ± 12 | 0,27 ± 0,01 | 5,85 ± 1,21 |

As can be seen from the results of the table, most of the ions are found in the solid fraction of the slurry and, therefore, the concentration is reduced after filtration. In the case of the GPM, there is no ion pass over 20 hours as all ions are below the detection limit except for sulphur, which has a high value because the nitrogen was recovered in the form of ammonium sulphate. The tubular membrane, on the other hand, does allow ions to pass through, especially those with a single charge such as K or Na. To a lesser extent it also allows the passage of the divalent ions Mg and Ca and finally, Fe is detected in very low concentration.

### Example 5: Gas fraction purine treatment

The proposed process allows the slurry to be treated on the same farm where it was generated so that all the effluents obtained are usable and do not pose a problem for the environment.

First, a solid-liquid separation phase is carried out to obtain a dry slurry useful as a fertilizer and a liquid fraction with a high total ammoniacal nitrogen (TAN) content. This fraction is taken to an evaporation chamber where two effluents are obtained: a dry slurry useful as a fertilizer that can be grouped with the one obtained in the previous step, and a gas with a high humidity and TAN content. This gaseous effluent is sent to a tank equipped with membranes that bring this solution into contact with an acid extracting solution of H₂SO₄.

In this way, it is possible to recover the TAN in the form of a dissolution of (NH₄)₂SO₄. The obtained inorganic fertilizer passes through a concentration phase to increase the value of this product and make it easier to transport. The TAN concentration of the steam is reduced to a suitable concentration, at which point the steam is extracted and condensed to obtain a water effluent with a low nitrogen concentration. The liquid fraction can be used to irrigate fields.

### Example 6: Permeability values

Experimental values of NH₃ and NH₄⁺ permeabilities are shown below (Table 5). The values shown in Table 5 are not dependent of the initial TAN concentration of the feed solution, every synthetic or form the liquid fraction of pig slurry.

**Table 5. Permeability values for NH₃ and NH₄⁺ obtained for experiments performed at 20°C and pH=9-10 with synthetic and pig slurry solutions with the tubular Pebax membrane**

| Membrane | Pᵢ | Synthetic (pH = 10) | Pig slurry (pH = 9) |
|---|---|---|---|
| H/H (tubular-8mm) | NH₃ | (1.1 ± 0.2) x 10⁻⁷ m/s | (1.4 ± 0.2) x 10⁻⁷ m/s |
| | NH₄⁺ | NA | (1.6 ± 0.9) x 10⁻⁸ m/s |
| H/H (tubular-18mm) | NH₃ | (2.5 ± 0.1) x 10⁻⁶ m/s | (2.7 ± 0.2) x 10⁻⁶ m/s |
| | NH₄⁺ | (1.6 ± 0.2) x 10⁻⁷ m/s | (3.7 ± 0.1) x 10⁻⁷ m/s |

### Citation List

### Patent Literature

- CN111467933 A
- US4963165

### Non-Patent Literature

- Dube, P. J., et al. "Enhancing recovery of ammonia from swine manure anaerobic digester effluent using gas-permeable membrane technology." Waste Management ,2016, vol. 49 pp. 372-377
- Andreu Serra-Toro et al. "Ammoniacal nitrogen recovery from pig slurry using a novel hydrophobic/hydrophilic selective membrane"; Journal of Environmental Chemical Engineering; 2022; Volume 10; Issue 5; 108434

## Claims

1. A process for recovering ammoniacal nitrogen, either NH₃/NH₄⁺ (aq)_{'} from a liquid phase, or ammonia, NH₃ (g) from a gas phase, wherein:
when the recovery is from a liquid phase, the process comprises permeating the nitrogen ammoniacal from a liquid phase at a pH from 7 to 10 through a tubular membrane module to a trapping solution at a pH from 1 to 4, to yield a solution comprising ammonia salts;
when the recovery is from a gas phase, the process comprises permeating ammonia gas through a tubular membrane module to a trapping solution at a pH from 1 to 4, to yield a solution with ammonia salts;
the tubular membrane module comprises an arrangement of tubes, wherein the tubes are made of polyether block amide.

2. The process according to claim 1, wherein the solution with ammonia salts further comprises ions selected from the group consisting of: K⁺, Na⁺, Cl⁻, Ca²⁺, Mg²⁺, H₂PO₄⁻/HPO₄²⁻, and mixtures thereof, and the process further comprises permeating the ions from the solution to the trapping solution through the tubular membrane.

3. The process according to claim 1, wherein the trapping solution at a pH from 1 to 4 is aqueous sulfuric acid yielding a solution with (NH₄⁺)₂SO₄.

4. The process according to any of the claims 1-3, comprising:
a1) circulating a trapping solution from an extractor tank to the inside of a tubular membrane module submerged in a tank which comprises the liquid phase comprising ammoniacal nitrogen, to chemically change the ammoniacal nitrogen to ammonia salts, yielding to a solution comprising ammonia salts; and
a2) circulating the solution with ammonia salts obtained in step a1) to either another tank or to the tank containing said trapping solution;
or, alternatively,
b1) first introducing the liquid phase comprising ammoniacal nitrogen into an evaporator to separate from the liquid phase a solid waste fraction and a gas comprising ammoniacal nitrogen;
b2) circulating a trapping solution from a tank to the inside of a tubular membrane module;
b3) circulating the gas comprising ammoniacal nitrogen from the evaporator to a tank comprising the tubular membrane module, where the gas contacts the trapping solution to chemically convert the ammoniacal nitrogen into ammonia salts, resulting in a solution comprising ammonia salts; and
b4) circulating the solution comprising ammonia salts obtained in step b3) to either another tank or to the tank comprising said trapping solution.

5. The process according to any of the claims 1-4, further comprising a previous step to steps a1) or b1) which comprises a solid-liquid separation phase to yield a solid material for use as fertilizer and a liquid fraction comprising ammoniacal nitrogen which is the starting liquid phase of claim 1.

6. The process according to any of the claims 1-5, wherein the liquid phase is swine slurry.

7. The process according to any of the claims 1-6, wherein the tubular membrane has a ratio between the diameter and the width in a range from 15 to 60 mm/mm.

8. The process according to any of the claims 1-7, wherein the process is conducted at room temperature.

9. The process according to any of the claims 1-8, wherein the process further comprises concentrating the solution with ammonia salts obtained in step b) to yield an aqueous concentrated solution of ammonia salts.

10. A tubular membrane module comprises an arrangement of tubes, wherein the tubes are made of polyether block amide, the tubular membrane has a ratio between the diameter and the width of the tubular membrane in a range from 15 to 60 mm/mm.

11. The tubular membrane module according to claim 10, wherein the ratio between the diameter and the width of the tubular membrane is in a range from 20 to 45 mm/mm.

12. The tubular membrane module according to any of the claims 10-11, obtainable by extrusion.

13. The tubular membrane module according to any of the claims 10-12, wherein the tubular membrane module has an arrangement of linear tubes with a reticular geometry.

14. A system for recovering ammoniacal nitrogen, either NH₃/NH₄⁺ (aq) from a liquid phase, comprising:
a) a tank (1) comprising a tubular membrane module which comprises an arrangement of tubes, wherein the tubes are made of polyether block amide; wherein the tubular membrane is submerged in a liquid phase comprising NH₃/NH₄⁺ (aq), to chemically change the ammoniacal nitrogen to ammonia salts;
b) a tank (2) comprising a trapping solution;
c) a delivery system (3) for circulating the trapping solution from the tank b) to the inside of a tubular membrane module, and for carrying the salts to either a third tank or to the tank containing said trapping solution; and
d) optionally, a base dispenser (9) to adjust the pH of the liquid phase comprising NH₃/NH₄⁺ (aq) in case it needs to be controlled;
wherein:
tank a) optionally have means for controlling temperature, means for controlling the pH (5), and means for controlling either ammoniacal nitrogen concentration or conductivity; and
tank b) optionally have an agitation system (6), means for controlling temperature, means for controlling the pH (5), and means for controlling either ammoniacal nitrogen concentration or conductivity.

15. A system for recovering ammonia, NH₃ (g), from a gas phase comprising:
a) an evaporator (8) to separate from the liquid phase comprising ammoniacal nitrogen a solid waste fraction and a gas phase comprising NH₃ (g);
b) a tank (1) comprising a tubular membrane module which comprises an arrangement of tubes, wherein the tubes are made of polyether block amide; wherein the tubular membrane is in a gas phase comprising NH₃ (g), to chemically change the ammoniacal nitrogen to ammonia salts;
c) a tank (2) comprising a trapping solution;
d) a delivery system (3) for circulating the trapping solution from the tank c) to the inside of a tubular membrane module, and for carrying the salts to either a third tank or to the tank containing said trapping solution; and
wherein:
tank a) optionally have means for controlling temperature, means for controlling the pH (5), and means for controlling either ammoniacal nitrogen concentration or conductivity; and
tank b) optionally have an agitation system (6), means for controlling, means for controlling the pH (5), and means for controlling either ammoniacal nitrogen concentration or conductivity.
